# EUROPÄISCHE PATENTSCHRIFT

(11) **EP 1 885 772 B1**
(45) Veröffentlichungstag und Bekanntmachung des Hinweises auf die Patenterteilung: **27.08.2008**
(21) Anmeldenummer: 06722611.8
(22) Anmeldetag: 15.03.2006
(51) Int. Cl.: C08J 3/12, C08G 63/88, B29B 9/16

(54) **VERFAHREN ZUR THERMISCHEN BEHANDLUNG VON POLYESTERPELLETS, UM EINE TEILKRISTALLISATION ZU ERREICHEN**
METHOD FOR THERMALLY TREATING POLYESTER PELLETS TO OBTAIN A PARTIAL CRYSTALLIZATION
PROCEDE DE TRAITEMENT THERMIQUE DE BOULETTES DE POLYESTER POUR REALISER UNE CRISTALLISATION PARTIELLE

(30) Priorität: 01.06.2005 DE 102005025111; 08.06.2005 DE 102005026354
(43) Veröffentlichungstag der Anmeldung: 13.02.2008
(73) Patentinhaber: BKG Bruckmann & Kreyenborg Granuliertechnik GmbH, 48157 Münster (DE)
(72) Erfinder: BRUCKMANN, Theodor, 48268 Greven-Gimbte (DE)
(74) Vertreter: Habbel, Hans-Georg
(86) Internationale Anmeldenummer: PCT/DE2006/000454
(87) Internationale Veröffentlichungsnummer: WO 2006/128408

(56) Entgegenhaltungen:
- EP-A- 0 597 155
- WO-A-03/037588
- WO-A-20/05044901

## Beschreibung

Die Erfindung bezieht sich auf ein Verfahren zur thermischen Behandlung von Polyesterpellets, um eine Teilkristallisation zu erreichen gemäß dem Oberbegriff des Hauptanspruches und eine Vorrichtung gemäß dem Oberbegriff des Anspruches 3.

Als Ausgangsmaterial für u. a. Folien und Verpackungen sowie Gefäße kommen aromatische Polyester- oder Copolyester, insbesondere Polyethylenterephthalat und dessen Copolymere, Polybutylenterephthalat und dessen Copolyester sowie Polytrimethylenterephthalat und Polyethylennaphthalat als Granulate zur Verarbeitung. Zur Beschreibung der vorliegenden Erfindung werden alle diese Polyester und Copolyester allgemein als Polyester bezeichnet.

Aus der nachveröffentlichten WO 2005/044901 A1 (BKG) ist ein gattungsbildendes Verfahren zur thermischen Behandlung von Polyesterpellets bekanntgeworden, bei welchem direkt nach einer Unterwassergranulation z. B. in einem "Unterwasser-Heißabschlag-Granuliersystem" die gerade hergestellten Pellets sehr schnell von Wasser befreit werden und unter Nutzung der Eigenwärme trocknen und kristallisieren. Um ein Verkleben der Pellets zu vermeiden, werden die Pellets unmittelbar nach dem Abschleudern des Wassers über einen Vibrations- oder Schwingförderer nach einer ausreichenden Verweildauer einer nachgeschalteten Abfüllanlage oder einem Festphasenpolykondensator zugeführt. Bei einem solchen Verfahren erfolgt der Kristallisationsvorgang von innen nach außen im Pellet, womit eine gleichmäßigere Kristallisation über den Durchmesser des Granulates erreicht wird. Bei diesem Verfahren wird also die Kristallisation ausschließlich unter Nutzung der Eigenwärme aus dem Schmelzezustand des Polymers bewirkt, und das bedeutet, daß den Pellets zwischen der Granulation und der nachgeschalteten Abfüllanlage oder Weiterverarbeitungsanlage keine Wärme von außen zugeführt wird. Hierdurch unterscheidet sich das Verfahren gemäß der WO 2005/044901 A1 grundsätzlich von den übrigen im Stand der Technik bekannten Verfahren.

So wird in der GB 1 250 690 A ein Verfahren zur Herstellung von Polyethylentherephthalatgranulaten beschrieben. Hierzu wird das Ausgangsmaterial als in üblicher Schmelzkondensation hergestellte, etwa 280° heiße Polyesterschmelze einem Unterwassergranulator zugeführt, wobei der aus der Düse gedrückte heiße Kunststoffstrang von einem aus einer Ringdüse kommenden Wasserstrahl erfaßt und abgekühlt wird. Weiterhin wird dieser Strang dann durch eine Unterwasserkühlstrecke einer Schneidvorrichtung zugeführt. Im Anschluß an die Schneidvorrichtung läuft das Granulat über ein Sieb, welches den Festkörper vom Wasser trennt, wobei das Waser über einen Kühler im Kreislauf geführt wird. Das nasse Granulat kann nach seiner Trocknung zur thermischen Nachkondensation eingesetzt werden. Dieses Granulat ist insbesondere, wenn es in einer thermischen Nachkondensation bei über 200° C behandelt wird, in festem Zustand für den Spritzguß geeignet.

Wesentlich bei diesem Prozeß ist, daß das im Stranggranulationsverfahren (Unterwasser-Kaltabschlag-Granuliersystem) hergestellte und daher weitgehend abgekühlte Produkt für irgendeine weitere thermische Behandlung, also auch für die Teilkristallisation, von Neuem aufgeheizt werden muß, also einen erheblichen Aufwand an Energie erfordert, die bei dem voraufgehenden Kühlverfahren verlorengegangen ist.

Aus der US-PS 5 540 868 ist es bekannt, wie mit unterschiedlichen Granulierungsverfahren aus amorphem Polyester kristalline Pellets hergestellt werden können. Dazu muß das amorphe Polyestervorprodukt auf Temperaturen über 70° erhitzt werden, um den Kristallisationsprozeß auszulösen. Jedoch hat das amorphe Polyester bei Temperaturen über 70° den Nachteil, daß es eine klebrige Oberfläche aufweist. Um ein Verkleben oder Verklumpen des amorphen Polyesters bei Kristallisationstemperaturen von über 70° C zu verhindern, muß das Vorprodukt als Granulat vorliegen und kann in einem Wirbelbettreaktor durch entsprechende Heißgasströme in Bewegung gehalten werden, bis zumindest die Oberfläche so weit auskristallisiert ist, daß ein Verkleben der Vorprodukte ausgeschlossen ist.

Während amorphes Polyester transparent ist, ist die kristalline Phase an der weißen Einfärbung deutlich zu erkennen. Üblicherweise wird zur Überwindung der Klebrigkeit von amorphem Polyester der Kristallisationsvorgang des Vorproduktes mit der weiteren verstärkten Polykondensation, die üblicherweise zwischen 200 - 230° in einem Wirbelbettreaktor durchgeführt wird, verbunden. Dazu wird der Reaktor derart gefahren, daß zunächst zur Überwindung der Klebrigkeit, eine Kristallisation bei einer optimalen Kristallisationstemperatur von ungefähr 150° C für mehrere Stunden gefahren wird und danach die Pellets oder Granulate für weitere Stunden zur höheren Kettenlänge bei Temperaturen zwischen 200 - 230° kondensiert werden.

In der ebenfalls nachveröffentlichten DE 10 2004 050 356 A1 wird nicht das erfindungsgemäße Verfahren beschrieben. In der Entgegenhaltung heißt es vielmehr im Anspruch 11, daß die Postgranulatoranlage einen wärmeisolierenden Behälter umfaßt.

Welcher Verfahrensschritt mit diesem wärmeisolierenden Behälter durchgeführt werden soll, wird auf Seite 3 am Ende des Absatzes 0010 erläutert, wo es heißt:
*Das heiße Granulat kann auch in einem wärmebeibehaltenden Zustand, zum Beispiel in einem wärmeisolierenden Behälter,* ***gelagert werden,*** *um den gewünschten Kristallisationsvorgang zu vollziehen*.

Es erfolgt also keine Förderung des Granulats durch den wärmeisolierenden Behälter, sondern das Granulat wird in dem Behälter gelagert und man hofft, daß diese Lagerung zu einer Kristallisation der Granulate führen soll, ohne daß diese miteinander verbacken und verkleben. Außerdem sollen die Granulate in einem wärmebeibehaltendem Zustand gehalten werden, d. h. sie sollen weder abkühlen noch sich erwärmen.

Abgesehen davon, daß eine Lagerung der den Trockner verlassenden heißen Granulate ohne eine Bewegungseinrichtung oder ohne eigene Bewegung nur zum Zusammenkleben der Granulate führen wird, beinhaltet die Lehre dieser Literaturstelle nicht die Verfahrenslehre gemäß der vorliegenden Anmeldung.

Der vorliegenden Erfindung liegt die Aufgabe zugrunde, das gattungsbildende Verfahren, bei welchem die Teilkristallisation durch die Eigenwärme des Pellets von innen nach außen erfolgt, so zu verbessern, daß noch einmal eine weitere Vereinfachung des Verfahrens erreichbar ist.

Hierzu wird gemäß der Erfindung vorgeschlagen, daß die Behandlungseinrichtung, die in der WO 2005/0044 901 A1 als Bewegungseinrichtung definiert ist, als wenigstens leicht geneigt bis vertikal ausgerichteter Kristallisationsreaktor ausgebildet ist, in welchem die Pellets mit einer Temperatur von größer als 100° aufgegeben werden, diesen Reaktor von der Aufgabestelle zur Abgabestelle durchwandern und diesen Kristallisationsbereich mit einer Temperatur von größer als 130° C verlassen.

"Leicht gneigt" bedeutet, daß der Reaktor nicht waagerecht steht bzw. liegt, sondern eine Neigung gegenüber der Horizontalen aufweist, die bis zu 90° gehen kann.

Es wurde überraschend gefunden, daß durch den exothermen Vorgang innerhalb des Reaktors ein Verkleben der Pellets verhindert wird, obgleich die Pellets innerhalb des Reaktors relativ dicht gelagert sind und nur aufgrund ihres Eigengewichtes den Reaktor durchwandern. Die Verweilzeit der Granulate im Reaktor liegt zwischen größer 1 Minute und vorzugsweise 8 Minuten und anschließend werden die teilkristallisierten Granulate der nachfolgenden Behandlungseinrichtung, z. B. einem Festphasenpolykondensator, einem Silo od. dgl. aufgegeben.

Die Erfindung bezieht sich auch auf eine Vorrichtung zur Durchführung des Verfahrens, die dadurch gekennzeichnet ist, daß eine Kristallisationsreaktorröhre vorgesehen wird, in der die Pellets aufgrund des Eigengewichtes vom Aufgabeende zum Abgabeende fließen. Die Reaktorröhre kann ohne Einbauten arbeiten oder Einbauten aufweisen, die eine Führung des Granulates bewirken, die zu einer Vergleichmäßigung des Kristallisationsvorganges führen. Hierbei kann gemäß einer weiteren Ausführungsform innerhalb des Reaktors auch eine rotierende paddeltragende Welle vorgesehen sein, die eine Durchmischung der Pellets bewirkt.

Vorzugsweise ist der Reaktor wärmeisoliert und die Weiterförderung der Granulate zwischen dem Abgabeende des Reaktors und der anschließenden Nachbehandlungseinrichtung oder einem Silo erfolgt z. B. über ein in die Förderleitung eingeschaltetes Gebläse.

Die Granulate durchwandern den Reaktor dichtgepackt, d. h. die unten abgezogene Granulatmenge wird oben ständig nachgefüllt. Die Menge des abgezogenen Granulates ist zudem regelbar.

Ein Ausführungsbeispiel der Erfindung wird nachfolgend anhand der Zeichnung erläutert.

In der Zeichnung ist mit 1 eine Schmelzepumpe und ein Siebwechsler bezeichnet, dem entsprechend Pfeil F₁ ein Polyester zugeführt wird. Am Ausgang des Siebwechslers ist ein Unterwasser-Heißabschlag-Granulator 2 vorgesehen, durch den kugel- oder linsenförmige Granulate hergestellt werden. Diese Granulate werden mittels Prozeßwasser über eine Förderleitung zu einer Wasser-Feststofftrennvorrichtung 3, z. B. einer Zentrifuge, geführt. Die Granulate verlassen dann die Wasser-Feststofftrennvorrichtung 3 über eine Förderleitung 4 mit einer Temperatur von über 100° C und werden einem Kristallisationsreaktor 5 aufgegeben, der bei dem dargestellten Ausführungsbeispiel als vertikal stehender Reaktor ausgebildet ist. In gleicher Weise kann aber auch ein wenigstens leicht geneigt angeordneter Reaktor vorgesehen werden. Die Granulate durchwandern den Reaktor 5 von der Aufgabestelle oder dem Aufgabeende zum Abgabeende, an das sich bei dem dargestellten Ausführungsbeispiel eine Fördervorrichtung 6 anschließt, die die Granulate unter Zuhilfenahme z. B. eines Gebläses einem Festphasenpolykondensator 8 zuführen.

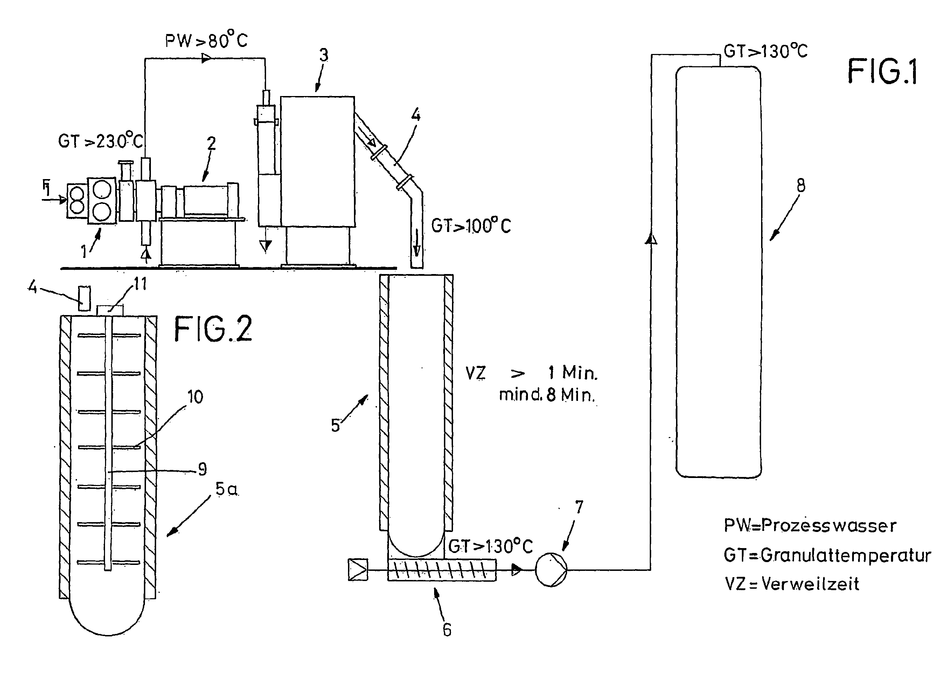

In Fig. 2 ist ebenfalls ein aufrecht stehender Kristallisationsreaktor 5a dargestellt, der eine Welle 9 aufweist, die mit Paddeln 10 besetzt ist und über einen Antriebsmotor 11 in Umdrehung versetzt wird. Auch dieser Reaktor 5a kann auch leicht geneigt aufgestellt werden.

In beiden Fällen ist der Reaktor mit einer Wärmeisolation versehen, die aber nicht zwingend notwendig ist.

In der Zeichnung sind Temperaturangaben und Verweilzeiten angegeben, wobei die folgende Bedeutung vorgesehen ist:
- PW =: Prozeßwassertemperatur
- GT =: Granulattemperatur
- VZ =: Verweilzeit

Es ist erkennbar, daß die dem Unterwasser-Heißabschlag-Granulator zugeführte Granulattemperatur über 230° liegt. Die Prozeßwassertemperatur in der Förderleitung zwischen dem Granulator 2 und der Wasser-Feststofftrennvorrichtung 3 liegt über 80° und die Granulate verlassen die Fördereinrichtung 4 mit einer Granulattemperatur von über 100° C.

Die Verweilzeit der Granulate im Reaktor 5 liegt höher als eine Minute und beträgt vorzugsweise acht Minuten.

Während die Granulateintrittstemperatur in den Reaktor 5 bei größer als 100° liegt, liegt die Granulattemperatur am Abgabeende des Reaktors 5 höher als 130° C, ohne Zugabe von Energie, um z. B. die Granulate anschließend zu temperieren.

Auch die Eintrittstemperatur der Granulate in den Festphasenpolykondensator 8 liegt vorzugsweise höher als 130°.

Bei diesen Temperaturangaben handelt es sich um die Oberflächentemperatur der Granulate.

Bei einem Ausführungsbeispiel hatte der Kristallisationsreaktor eine Höhe von 1 m, einen Innendurchmesser von 270 mm und verengte sich am Austrag auf 100 mm. Diese Austragsöffnung war in ihrer Größe zudem regulierbar. Der Reaktor stand aufrecht, d. h. war vertikal ausgerichtet.

## Patentansprüche

1. Verfahren zur thermischen Behandlung von Polyesterpellets, um eine Teilkristallisation zu erreichen, wobei die Polyesterschmelze einem Unterwasser-Granuliersystem zugeführt und granuliert wird,
die erzielten Granulate auf kurzem Förderweg von dem Unterwasser-Granuliersystem einer Wasser-Feststofftrennvorrichtung aufgegeben werden,
die getrockneten Granulate anschließend ohne die Zuführung externer Energie bzw. Wärme mit einer Granulattemperatur von größer als 100° C einer Behandlungseinrichtung aufgegeben werden und
die zur Teilkristallisation führende Wärmebehandlung mittels der in den Granulaten vorhandenen Eigenwärme erfolgt, **dadurch gekennzeichnet, daß** die Granulate einem wenigstens leicht geneigt ausgerichteten Kristallisationsreaktor mit einer Temperatur von größer als 100° C aufgegeben werden, ihn von der Aufgabestelle zur Abgabestelle durchwandern und diesen Kristallisationsbereich mit einer Temperatur von größer als 130° C ohne Zugabe von Energie verlassen.

2. Verfahren nach Anspruch 1, **dadurch gekennzeichnet, daß** die Granulate vom Abgabeende des Kristallisationsreaktors einem Silo, einem Festphasenpolykondensator oder einer anderen Weiterbehandlungsanlage zugeführt werden.

3. Vorrichtung zur Durchführung des Verfahrens zur thermischen Behandlung von Polyesterpellets, um eine Teilkristallisation der Pellets zu erreichen mit einem Unterwasser-Granulator (2) und einer Wasser-Feststofftrennvorrichtung (3), **gekennzeichnet durch** eine wenigstens leicht geneigt ausgerichtete Reaktorröhre (5, 5a), an deren unterem Ende eine Fördervorrichtung (6) angeordnet ist, die die teilkristallisierten Granulate einem Silo, einem Festphasenpolykondensator (8) oder einer anderen Weiterbehandlungsanlage zuführen.

4. Vorrichtung nach Anspruch 3, **dadurch gekennzeichnet, daß** der Reaktor mit Einbauten versehen ist, die durch die Führung des Granulats die Kristallisation vergleichmäßigen.

5. Vorrichtung nach Anspruch 3, **dadurch gekennzeichnet, daß** der Reaktor (5a) mit einer rotierenden, paddeltragenden Welle (9) ausgerüstet ist.

6. Vorrichtung nach Anspruch 3, 4 oder 5, **dadurch gekennzeichnet, daß** der Reaktor (5, 5a) wärmeisoliert ist.

7. Vorrichtung nach Anspruch 3, **gekennzeichnet durch** ein Gebläse (7) in der Förderleitung zwischen Fördereinrichtung (6) und dem Festphasenpolykondensator (8).

## Claims

1. Method of thermally treating polyester pellets to obtain partial crystallisation where the polyester melt is supplied to a submerged granulating system and granulated, the granulates thus obtained are transferred from the submerged granulating system by a short conveying path to a device for separating the water from the solid material, the dried granulates are then transferred to a treatment device at a temperature greater than 100°C without supplying external energy or heat, and the heat treatment leading to partial crystallization takes place by means of the heat present in the granulates, **characterised in that** the granulates are fed into a crystallisation reactor which is at least slightly inclined at a temperature greater than 100°C, pass through the reactor from the infeed to the outlet point, and then leave this crystallisation area at a temperature greater than 130°C without the addition of external energy.

2. Process according to claim 1 **characterised in that** the granulates are fed from the outlet end of the crystallisation reactor to a bin, a solid-phase polycondenser or another system for further treatment.

3. Device for carrying out the process of thermally treating polyester pellets to obtain partial crystallisation of the pellets with a submerged granulator (2) and a device (3) for separating the water from the solid material **characterised by** a reactor pipe (5, 5a) which is at least slightly inclined, at the lower end of which a conveying device (6) is located to transfer the partially crystallised granulates to a bin, a solid-phase polycondenser (8) or another system for further treatment.

4. Device according to claim 3 **characterised in that** the reactor is fitted with baffles which homogenise the crystallisation process through the guidance of the granulates.

5. Device according to claim 3 **characterised in that** the reactor (5a) is fitted with a rotating shaft (9) fitted with paddles.

6. Device according to claim 3, 4 or 5, **characterised in that** the reactor (5, 5a) is heat-insulated.

7. Device according to claim 3 **characterised by** a fan (7) in the conveyor pipe between the conveying device (6) and the solid-phase polycondenser (8).

## Revendications

1. Procédé de traitement thermique de boulettes en polyester pour obtenir une cristallisation partielle, le polyester fondu étant amené à un système de granulation sous l'eau puis transformé en granulats,
les granulats obtenus étant chargés, par un itinéraire de convoyage court partant du système granulateur sous l'eau, dans un dispositif de séparation eau - matière solide,
les granulats séchés et se trouvant à une température supérieure à 100 °C sans apport d'énergie ou de chaleur externes étant ensuite chargés dans un équipement de traitement et
le traitement thermique qui conduit à la cristallisation partielle ayant lieu au moyen de la chaleur propre des granulats présente dans ceux-ci, **caractérisé en ce que** les granulats sont chargés, à une température supérieure à 100 °C, dans un réacteur de cristallisation orienté au moins légèrement incliné, qu'ils traversent ce réacteur du point de chargement au point de sortie et quittent cette zone de cristallisation à une température supérieure à 130 °C sans que de l'énergie n'ait été ajoutée.

2. Procédé selon la revendication 1, **caractérisé en ce que** les granulats sont conduits, depuis la sortie à l'extrémité du réacteur de cristallisation, à un silo, un polycondensateur à phase solide ou à une autre installation de poursuite du traitement.

3. Dispositif permettant de réaliser le procédé de traitement thermique de boulettes en polyester pour obtenir une cristallisation partielle des boulettes, comprenant un granulateur (2) sous l'eau et un dispositif séparateur (3) eau - matière solide, **caractérisé par** un tube réacteur (5, 5a) orienté au moins légèrement incliné, à l'extrémité inférieure duquel est agencé un dispositif de
de convoyage (6) qui amène les granulats partiellement cristallisés dans un silo, un polycondensateur (8) à phase solide ou à une autre installation de poursuite du traitement.

4. Dispositif selon la revendication 3, **caractérisé en ce que** le réacteur est doté d'éléments incorporés qui, du fait du guidage du granulat, uniformisent la cristallisation.

5. Dispositif selon la revendication 3, **caractérisé en ce que** le réacteur (5a) est équipé d'un arbre (9) rotatif doté de palettes.

6. Dispositif selon la revendication 3, 4 ou 5, **caractérisé en ce que** le réacteur (5, 5a) est thermo-isolé.

7. Dispositif selon la revendication 3, **caractérisé par** la présence d'une soufflerie (7) dans la conduite de convoyage située entre l'équipement de convoyage (6) et le polycondensateur (8) à phase solide.
